(19) **Europäisches Patentamt / European Patent Office / Office européen des brevets**

(11) **EP 4 597 447 A1**

(12) **EUROPEAN PATENT APPLICATION**

(43) Date of publication:
06.08.2025 Bulletin 2025/32

(21) Application number: 24305189.3

(22) Date of filing: 02.02.2024

(51) International Patent Classification (IPC):
*G06V 10/764* (2022.01)    *G06V 10/82* (2022.01)

(52) Cooperative Patent Classification (CPC):
G06V 10/82; G06V 10/764

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(71) Applicant: Damae Medical
75013 Paris (FR)

(72) Inventors:
• OGIEN, Jonas
  Bourges (FR)
• FISCHMAN, Sébastien
  Paris (FR)

(74) Representative: Osha BWB
2, rue de la Paix
75002 Paris (FR)

(54) **SYSTEMS AND METHODS FOR DETERMINING A REGION OF INTEREST OF A BIOLOGICAL TISSUE**

(57) According to a first aspect, the present disclosure relates to a system for determining a region of interest of a biological tissue comprising: an image acquisition system configured to obtain an image of the biological tissue; a first processing module configured to generate, using the image of the biological tissue: a classification parameter for characterising the image of the biological tissue; an attention matrix, wherein the attention matrix is a matrix of weights associated to regions of the image, wherein each weight indicates an impact contribution of the associated region of the image on the generating of the classification parameter; and a local parameters matrix, wherein each parameter of the local parameters matrix corresponds to a weight of the attention matrix and characterises the associated region of the image; a second processing module configured to generate a mapping element based on the classification parameter, the attention matrix, and the local parameters matrix the mapping element identifying the region of interest; and a display module configured to display the mapping element relative to the image of the biological tissue.

**FIG. 1**

EP 4 597 447 A1

**Description**

TECHNICAL FIELD OF THE INVENTION

The present description relates to systems and methods for determining a region of interest of a biological tissue.

BACKGROUND OF THE INVENTION

Many systems are capable of obtaining high resolution microscopic images of biological tissue. These include reflectance confocal microscopy (RCM), optical coherence tomography (OCT), line-field confocal OCT (LC-OCT), and multi-photon fluorescence imaging. Some methods have further utilised artificial intelligence (AI) to characterise images of biological tissue taken by such systems (Refs [1]-[5]). These AI methods can provide a single classification score for the image of the biological tissue, indicating the probability that an image is associated with a medical condition. Some of these methods further disclose the generation of heatmaps to indicate the classification score with respect to the image. For example, Ref [3] discloses dividing an image into patches and generating a local classification score for each patch, which are then used to generate a heatmap representing the tissue. However, it is important for a user of such methods to know which image features were taken into consideration by the AI algorithm to generate a classification score.

For example, for aiding basal cell carcinoma (BCC) diagnosis, it can be helpful to associate the single classification score with the visualization of segmented lobules of cancerous basal cells within the image of the biological tissue. This would help to associate clear, "readable" structures within the image with a classification score for the entire image. The visualization of such structures is helpful for understanding of the image by the user, but in the context of in vivo imaging, it can also be helpful for the understanding of the patient.

Using the context of BCC diagnosis as an example, it is not only relevant to indicate the regions of the image that contained features that contributed to a high-risk score, but it is also relevant to indicate the regions of the image that contained features that locally appear to be BCC features even if the global classification score for BCC is low. This helps to identify image features imitating the BCC features but which actually do not correspond to an actual BCC, improving the understanding of the images by the user. In particular, this aspect is helpful for significantly improving the diagnosis accuracy. This applies to other pathologies and medical conditions other than BCC.

Some work has focused on identifying determining parts of an image that contribute significantly to the classification of an image. Methods such as (see, for example, Ref [8]) are computationally heavy and cannot typically be applied in real time. Ref [9] discloses applying attention mechanisms for salience detection in age estimation using images, but does not consider applying these mechanisms to identify regions of an image that contains features that locally appear to be (or imitate) features associated with a medical condition even if the classification score (with respect to the medical condition) for that image is low.

SUMMARY

In what follows, the term "comprise" is synonym of (means the same as) "include" and "contains", is inclusive and open, and does not exclude other non-recited elements. Moreover, in the present disclosure, when referring to a numerical value, the terms "about" and "substantially" are synonyms of (mean the same as) a range comprised between 80% and 120%, preferably between 90% and 110%, of the numerical value.

According to a first aspect, the present description relates to a system for determining a region of interest of a biological tissue comprising: an image acquisition system configured to obtain an image of the biological tissue; a first processing module configured to generate, using the image of the biological tissue: a classification parameter for characterising the image of the biological tissue; an attention matrix, wherein the attention matrix is a matrix of weights associated to regions of the image, wherein each weight indicates a contribution of the associated region of the image on the generating of the classification parameter; and a local parameters matrix, wherein each parameter of the local parameters matrix corresponds to a weight of the attention matrix and characterises the associated region of the image; a second processing module configured to generate a mapping element based on the classification parameter, the attention matrix, and the local parameters matrix the mapping element identifying the region of interest; and a display module configured to display the mapping element relative to the image of the biological tissue.

In this way a system is provided to identify regions of interest in a tissue image that comprise features imitating the medical condition. This can aid with providing further features for medical diagnosis. For example, if the classification parameter characterises the image as not being associated with a medical condition, e.g. BCC, this system can identify regions of the image that were "focused" on in the determination of the classification parameter and which, when taken individually (using the local parameters matrix), were characterised as being strongly associated with the medical condition, e.g BCC. These regions may be thought of as regions that imitate the medical condition BCC, and can provide further insight for medical diagnosis.

By using the attention matrix, an efficient means of identifying regions of interest is achieved by determining what regions of an image have contributed most to the generation of the classification parameter. Furthermore, by combining this with the local parameters matrix, regions of interest may be determined that are imitating a medical condition.

Additionally, the system enables the reduction in the quantity of data and displayed information for cases where there are no imitators.

The system provides an efficient means of obtaining the mapping element to indicate the features of interest so that it is suitable for use in real time with a real-time image acquisition system that acquires images of the biological tissue, such as LC-OCT.

In an embodiment, the classification parameter is a global parameter that characterises the whole image of the biological tissue.

In an embodiment, each region of the image is associated with the classification parameter and a single parameter of the local parameters matrix.

According to an embodiment, the classification parameter is a score indicating a probability of a medical condition being associated with the image of the biological tissue, and wherein each parameter of the local parameters matrix is a score indicating a probability of the medical condition being associated with the region of the image.

According to an embodiment, the first processing module comprises a machine-learned model, the machine-learned model trained to generate the classification parameter, wherein the classification parameter and, optionally, the local parameters matrix are generated using the machine-learned model.

According to an embodiment, the machine learned model comprises an attention module configured to generate the attention matrix.

According to an embodiment, the machine-learned model is a convolutional neural network.

According to an embodiment, the classification parameter is generated based on the attention matrix.

According to an embodiment, the second processing module is further configured to: generate a patch matrix based on the attention matrix and the local parameters matrix; filter patches in the patch matrix based on the attention matrix; filter the patches in the patch matrix based on the local parameters matrix; and generate the mapping element based on the patch matrix.

In an embodiment, the filtering the patches in the patch matrix based on the attention matrix comprises comparing each weight of the attention matrix to a first threshold; or determining a ranking of the weights in the attention matrix.

In an embodiment, the filtering the patches in the patch matrix based on the local parameters matrix comprises comparing each parameter of the local parameters matrix to a second threshold; or determining a ranking of the parameters of the local parameters matrix.

According to an embodiment, the mapping element further identifies the classification parameter.

According to an embodiment, the classification parameter is associated with a display feature of a set of predefined display features, each display feature of the set of predefined display features associated with a range of possible classification parameter values, wherein the mapping element comprises the display feature associated with the classification parameter.

In an embodiment, the display feature is one of a colour, a level of transparency, or a shape.

According to an embodiment, wherein the machine-learned model comprises a single classification head configured to generate the classification parameter, the attention matrix and the local parameters matrix; and a multi-class classification head configured to generate a plurality of further classification parameters.

In an embodiment, the multi-class classification head is further configured to generate a plurality of further attention matrices, wherein each further attention matrix is a matrix of weights associated to the regions of the image, each further attention matrix associated with a further classification parameter of the plurality of further classification parameters, and a plurality of further local parameters matrices, each further local parameters matrix associated with a further attention matrix, wherein each parameter of the further local parameters matrix corresponds to a weight of the associated further attention matrix and characterises the associated region of the image. In an embodiment the second processing module is further configured to: for each further classification parameter, generate a further mapping element based on the further classification parameter, the associated further attention matrix, and the further local parameters matrix; and the display module further configured to: display at least one further mapping element.

In an embodiment, the at least one further mapping element to display is associated with the further classification parameter of the plurality of further classification parameters that has the highest value. Alternatively, the at least one further mapping element to display is chosen by a user.

According to an embodiment, the image of the biological tissue is a microscopy image.

According to an embodiment, the image acquisition system is one of a reflectance confocal microscopy system, an optical coherence tomography system, a line-field confocal optical coherence tomography system, a dermoscopy system, and a multi-photon fluorescence imaging.

According to an embodiment the trained machine-learned model was trained by on a set of training images, the set of training images obtained by: obtaining a 3D representation of biological tissue, the 3D representation obtained by stacking images in a first plane; and slicing the 3D representation in a second plane to create the set of training images.

According to a second aspect, the present description relates to a method for determining a region of interest of a biological tissue comprising: obtaining an image of the biological tissue; generating, using the image of the biological tissue: a classification parameter for characterising the image of the biological tissue; an attention matrix, wherein the attention matrix is a matrix of weights associated to regions of the image, wherein each weight indicates a contribution of the associated region of the image on the generating of the classification parameter; and a local parameters matrix, wherein each parameter of the local parameters matrix corresponds to a weight of the attention matrix and characterises the associated region of the image; generating a mapping element based on the classification parameter, the attention matrix, and the local parameters matrix the mapping element identifying the region of interest; and displaying the mapping element relative to the image of the biological tissue.

According to a third aspect, the present description relates to a computer readable medium comprising instructions which, when executed by a computer, cause the computer to carry out the method according to the second aspect.

## BRIEF DESCRIPTION OF DRAWINGS

Other advantages and features of the invention will become apparent on reading the description, illustrated by the following figures which represent:

- FIG. 1 is a schematic of a system in accordance with an embodiment;
- FIG. 2 illustrates a neural network in accordance with an embodiment;
- FIG. 3 illustrates a convolutional neural network in accordance with an embodiment;
- FIG. 4 illustrates generation of a mapping element in accordance with an embodiment;
- FIG. 5 illustrates a display module in accordance with an embodiment; and
- FIG. 6 outlines the steps of a method in accordance with an embodiment.

## DETAILED DESCRIPTION

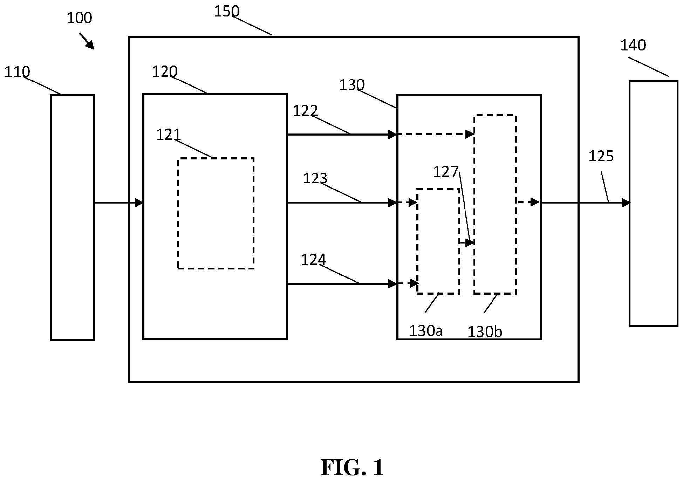

FIG. 1 illustrates a high-level overview of a system 100 according to the present disclosure. The system 100 is used for determining regions of interest in a biological tissue. The system 100 comprises an image acquisition module 110, a first processing module 120, a second processing module 130, and a display module 140. In an embodiment, the first processing module 120 and the second processing module 130 are modules of a computer 150.

The image acquisition module 110 is configured to acquire an image of the biological tissue. In an embodiment, the image of the biological tissue is a microscopic image of the biological tissue. The microscopic image may be an LC-OCT image, a dermoscopy image, an RCM image, or a multiphoton microscope image. In embodiments, the image acquisition module 110 comprises a computer processor configured to load an image from a computer memory for off-line analysis, where the image may be an image acquired by LC-OCT, dermoscopy, RCM, or multiphoton fluorescence imaging.

In an embodiment, the image acquisition module 110 comprises a medical imaging system. In an embodiment, the medical imaging system is an LC-OCT system. In alternative embodiments, the medical imaging system is a dermoscope, a multiphoton microscope, or an RCM system.

In an embodiment, the image acquisition module 100 may further process the image of the biological tissue, using any of a plurality of known techniques. In an embodiment, the image acquisition module 100 may determine a part, or region, of an image to be used as the image of the biological tissue for processing by the further blocks of the system 100, such as the first processing module 120 and the second processing module 130.

The image acquired by the image acquisition module 110 is then processed by a first processing module 120. The first processing module 120 is configured to receive the image of the biological tissue from the image acquisition module 110 and, upon processing, output a plurality of parameters determined from the image. In an embodiment, the plurality of parameters comprises at least one classification parameter 122, at least one attention matrix 123, and at least one local parameters matrix 124. In an embodiment, the first processing module 120 comprises a machine-learned model 121 configured to generate the at least one classification parameter 122, the at least one attention matrix 123, and the at least one local parameters matrix 124. Alternatively, other methods, not using a machine-learned model 121, can be used to generate the at least one classification parameter 122, the at least one attention matrix 123, and the at least one local parameters matrix 124.

Each classification parameter 122 characterizes the whole image.

According to embodiments, the classification parameter 122 is one of the following: a morphological measurement, a cytological measurement, an optical measurement, a measurement characterizing a chemical composition, a mechanical measurement, a combination of such measurements, or a score characterizing the tissue condition, for example a score based on at least one of those measurements or a score based on a prediction by an AI model. For example, the classification parameter may be a score indicating a probability of presence of a lesion or other condition of the tissue, such as a lesion of predetermined nature.

In an embodiment, the classification parameter 122 is a probabilistic prediction of a tissue condition, a medical condition or medical classification. In an embodiment, a machine-learned model 121 is trained to perform a single-class classification, such as whether the image of the biological tissue is associated with a single medical condition (e.g. BCC). In this case, a single classification parameter 122 is output from the first processing module 120, where the single classification parameter 122 provides an indication of whether the image of the biological tissue is associated with the single class or single medical condition (e.g. BCC).

Additionally or alternatively, the machine-learned model 121 is trained to perform a multi-class classification for a given set of medical conditions. The machine-learned model 121 is trained to output multiple classification parameters 122, each classification parameter 122 indicating whether the image of the biological tissue is associated with a medical condition of the set of medical conditions. The set of medical conditions may be BCC, Dermal nevus, Melanocytic lesions, Actinic Keratosis (AK)/SCC, Sebaceous hyperplasia (SH), healthy skin, and an "Other" category for various benign pathologies. For example, for a set of medical conditions including BCC, Dermal nevus and Melanocytic lesions, the machine-learned model 121 is trained to output a first classification parameter 122 indicating to which extent the image is associated with BCC, and a second classification parameter indicating to which extent the image is associated with Dermal nevus, and a third classification parameter indicating to which extent the image is associated with Melanocytic lesions. It will be clear to a person of ordinary skill in the art that there could be a different number of medical conditions in the set of medical conditions.

In an embodiment, each of the multiple classification parameters 122 is one of the following: a morphological measurement, a cytological measurement, an optical measurement, a measurement characterizing a chemical composition, a mechanical measurement, a combination of such measurements, a score characterizing the tissue condition, for example based on at least one of those measurements. For example, the classification parameter may be a score indicating a probability of presence of a lesion or other condition of the tissue, such as a lesion of predetermined nature.

In an embodiment, the machine-learned model 121 comprises two-heads: a first head configured to perform a single-class classification of the image with respect to a first medical condition and a second head configured to perform a multi-class classification of the image with respect to a set of multiple medical conditions. In an embodiment, the first medical condition is included in the set of multiple medical conditions. The first head (or single-class head) is optimised for classification of the first medical condition. The second head is not optimised for a single particular class. In this way, a mapping element generated from the first head can be as accurate as possible for a particular condition. The second head provides an indication of other medical conditions that it could be, other than the first medical condition.

In an embodiment, the classification parameter 122 is a probability between 0 and 1 that characterises whether the whole image tends towards having the medical condition or not having the medical condition. In alternative embodiments, the classification parameter 122 is a percentage probability, or another means of representing the probability. In an alternative embodiment, the classification parameter 122 is a 0 or a 1, or a value from a set of discrete values.

The attention matrix 123 is a matrix of attention weights associated to regions of the image of the biological tissue, each weight indicating a level of "usefulness", or a relevance of that region in the generation of the classification parameter 122 of the said regions for generation of the global classification parameter 122. The attention weight indicates a contribution of the associated region of the image on the generation of the classification parameter. The attention weight thus indicates the importance, impact and/or relevance of a region of the image when determining the classification parameter 122.

The local parameters matrix 124 is a matrix of parameters for regions of the image, wherein each parameter characterises a region of the image.

According to embodiments, the local parameters matrix 124 comprises a plurality of parameters of the following: a morphological measurement, a cytological measurement, an optical measurement, a measurement characterizing a chemical composition, a mechanical measurement, a combination of such measurements, or a score characterizing the tissue condition, for example based on at least one of those measurements. For example, the classification parameter may be a score indicating a probability of presence of a lesion or other condition of the tissue, such as a lesion of predetermined nature.

In an embodiment, each local parameter of the local parameters matrix 124 is a probabilistic prediction of a tissue condition, a medical condition or medical classification.

The second processing module 130 uses the at least one classification parameter 122, the at least one attention matrix 123 and the at least one local parameters matrix 124 to generate a mapping element 125. The second processing module 130 may optionally include a patch matrix module 130a and a mapping element module 130b. The mapping element 125 and its generation will be described in further detail below. For now, it can be said that the mapping element 125 is an image that identifies, or indicates, the region of interest and gives an indication of the global classification parameter 122.

A display module 140 processes the mapping element 125 to display to the user. The display module 140 may display the mapping element 125 relative to an image of the biological tissue. In an embodiment, the display module 140 displays the mapping element 125 superimposed on the image of the biological tissue.

Machine learning (ML), broadly defined, is the extraction of patterns and insights from data. The phrases "artificial intelligence", "machine learning", "deep learning", and "pattern recognition" are often convoluted, interchanged, and used synonymously throughout the literature. This ambiguity arises because the field of "extracting patterns and insights from data" was developed simultaneously and disjointedly among a number of classical arts like mathematics, statistics, and computer science. For consistency, the term machine learning, or machine-learned, will be adopted herein. However, a person of ordinary skill in the art will recognize that the concepts and methods detailed hereafter are not limited by this choice of nomenclature.

Machine-learned model types may include, but are not limited to, generalized linear models, Bayesian regression, random forests, and deep models such as neural networks, convolutional neural networks, and recurrent neural networks. Machine-learned model types, whether they are considered deep or not, are usually associated with additional "hyperparameters" which further describe the model. For example, hyperparameters providing further detail about a neural network may include, but are not limited to, the number of layers in the neural network, choice of activation functions, inclusion of batch normalization layers, and regularization strength. It is noted that in the context of machine learning (ML), the regularization of a machine-learned model refers to a penalty applied to the loss function of the machine-learned model and should not be confused with the regularization of a seismic dataset. Commonly, in the literature, the selection of hyperparameters surrounding a machine-learned model is referred to as selecting the model "architecture". Once a machine-learned model type and hyperparameters have been selected, the machine-learned model is trained to perform a task, such as a classification task or a classification of a medical condition. In accordance with one or more embodiments, a machine-learned model type and associated architecture are selected, the machine-learned model is trained to perform the classification task so as to provide a classification parameter 122. The performance of the machine-learned model is evaluated, and the machine-learned model is used in a production setting (also known as deployment of the machine-learned model).

As noted, the machine-learned model is trained to generate a classification parameter 122. When deployed, the machine-learned model 121 generates the classification parameter 122, the attention matrix 123 and the local parameters matrix 124.

In an embodiment, the selected machine-learned model 121 type is a convolutional neural network (CNN). A CNN may be more readily understood as a specialized neural network (NN). Thus, a cursory introduction to a NN and a CNN are provided herein. However, it is noted that many variations of a NN and CNN exist. Therefore, a person of ordinary skill in the art will recognize that any variation of the NN or CNN (or any other machine-learned model) may be employed without departing from the scope of this disclosure. Further, it is emphasized that the following discussions of a NN and a CNN are basic summaries and should not be considered limiting.

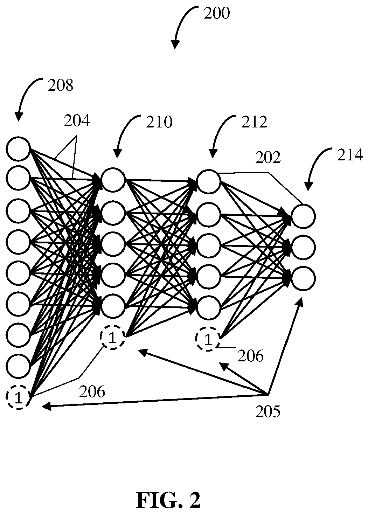

A diagram of a neural network is shown in FIG. 2. At a high level, a neural network 200 may be graphically depicted as being composed of nodes 202, where here any circle represents a node, and edges 204, shown here as directed lines. The nodes 202 may be grouped to form layers 205. FIG. 52 displays four layers 208 210 212 214 of nodes 202 where the nodes 202 are grouped into columns, however, the grouping need not be as shown in FIG. 2. The edges 204 connect the nodes 202. Edges 204 may connect, or not connect, to any node(s) 202 regardless of which layer 205 the node(s) 202 is in. That is, the nodes 202 may be sparsely and residually connected. A neural network 200 will have at least two layers 205, where the first layer 208 is considered the "input layer" and the last layer 214 is the "output layer". Any intermediate layer 210 212 is usually described as a "hidden layer". A neural network 200 may have zero or more hidden layers 210 212 and a neural network 200 with at least one hidden layer 210 212 may be described as a "deep" neural network or as a "deep learning method". In general, a neural network 200 may have more than one node 202 in the output layer 214. In this case the neural network 200 may be referred to as a "multi-target" or "multi-output" network.

Nodes 202 and edges 204 carry additional associations. Namely, every edge is associated with a numerical value. The edge numerical values, or even the edges 204 themselves, are often referred to as "weights" or "parameters". While training a neural network 200, numerical values are assigned to each edge 204. Additionally, every node 202 is associated with a numerical variable and an activation function. Activation functions are not limited to any functional class, but traditionally follow the form

$$A = f\left(\sum_{i \in (incoming)}[(node\ value)_i\ (edge\ value)_i]\right) \text{EQ 1}$$

where $i$ is an index that spans the set of "incoming" nodes 202 and edges 204 and $f$ is a user-defined function. Incoming nodes 202 are those that, when viewed as a graph (as in FIG. 2), have directed arrows that point to the node 202 where the numerical value is being computed. Some functions for $f$ may include the linear function $f(x) = x$, sigmoid function $f(x) = 1/(1$

$+ e\^(-x)$ ), and rectified linear unit function $f(x) = max (0, x)$, however, many additional functions are commonly employed. Every node 202 in a neural network 200 may have a different associated activation function. Often, as a shorthand, activation functions are described by the function $f$ by which it is composed. That is, an activation function composed of a linear function $f$ may simply be referred to as a linear activation function without undue ambiguity.

When the neural network 200 receives an input, the input is propagated through the network according to the activation functions and incoming node 202 values and edge 204 values to compute a value for each node 202. That is, the numerical value for each node 202 may change for each received input. Occasionally, nodes 202 are assigned fixed numerical values, such as the value of 1, that are not affected by the input or altered according to edge 204 values and activation functions. Fixed nodes 202 are often referred to as "biases" or "bias nodes" 20), displayed in FIG. 2 with a dashed circle.

In some implementations, the neural network 200 may contain specialized layers 205, such as a normalization layer, or additional connection procedures, like concatenation. A person of ordinary skill in the art will appreciate that these alterations do not exceed the scope of this disclosure.

As noted, the training procedure for the neural network 200 comprises assigning values to the edges 204. To begin training the edges 204 are assigned initial values. These values may be assigned randomly, assigned according to a prescribed distribution, assigned manually, or by some other assignment mechanism. Once edge 204 values have been initialized, the neural network 200 may act as a function, such that it may receive inputs and produce an output. As such, at least one input is propagated through the neural network 200 to produce an output. Training data is provided to the neural network 200. Generally, training data consists of pairs of inputs and associated targets. The targets represent the "ground truth", or the otherwise desired output, upon processing the inputs. During training, the neural network 200 processes at least one input from the training data and produces at least one output. Each neural network 200 output is compared to its associated input data target. The comparison of the neural network 200 output to the target is typically performed by a so-called "loss function"; although other names for this comparison function such as "error function", "misfit function", and "cost function" are commonly employed. Many types of loss functions are available, such as the mean-squared-error function, however, the general characteristic of a loss function is that the loss function provides a numerical evaluation of the similarity between the neural network 200 output and the associated target. The loss function may also be constructed to impose additional constraints on the values assumed by the edges 204, for example, by adding a penalty term, which may be physics-based, or a regularization term (not be confused with regularization of seismic data). Generally, the goal of a training procedure is to alter the edge 204 values to promote similarity between the neural network 200 output and associated target over the training data. Thus, the loss function is used to guide changes made to the edge 204 values, typically through a process called "backpropagation".

While a full review of the backpropagation process exceeds the scope of this disclosure, a brief summary is provided. Backpropagation consists of computing the gradient of the loss function over the edge 204 values. The gradient indicates the direction of change in the edge 204 values that results in the greatest change to the loss function. Because the gradient is local to the current edge 204 values, the edge 204 values are typically updated by a "step" in the direction indicated by the gradient. The step size is often referred to as the "learning rate" and need not remain fixed during the training process. Additionally, the step size and direction may be informed by previously seen edge 204 values or previously computed gradients. Such methods for determining the step direction are usually referred to as "momentum" based methods.

Once the edge 204 values have been updated, or altered from their initial values, through a backpropagation step, the neural network 200 will likely produce different outputs. Thus, the procedure of propagating at least one input through the neural network 200, comparing the neural network 200 output with the associated target with a loss function, computing the gradient of the loss function with respect to the edge 204 values, and updating the edge 204 values with a step guided by the gradient, is repeated until a termination criterion is reached. Common termination criteria are: reaching a fixed number of edge 204 updates, otherwise known as an iteration counter; a diminishing learning rate; noting no appreciable change in the loss function between iterations; reaching a specified performance metric as evaluated on the data or a separate hold-out data set. Once the termination criterion is satisfied, and the edge 204 values are no longer intended to be altered, the neural network 200 is said to be "trained."

A CNN is similar to a neural network 200 in that it can technically be graphically represented by a series of edges 204 and nodes 202 grouped to form layers. However, it is more informative to view a CNN as structural groupings of weights; where here the term structural indicates that the weights within a group have a relationship. CNNs are widely applied when the data inputs also have a structural relationship, for example, a spatial relationship where one input is always considered "to the left" of another input. Images have such a structural relationship. Consequently, a CNN is an intuitive choice for determining a region of interest of a biological tissue.

A structural grouping, or group, of weights is herein referred to as a "filter". The number of weights in a filter is typically much less than the number of inputs, where here the number of inputs refers to the number of pixels in an image. In a CNN, the filters can be thought as "sliding" over, or convolving with, the inputs to form an intermediate output or intermediate representation of the inputs which still possesses a structural relationship. Like unto the neural network 200, the intermediate outputs are often further processed with an activation function. Many filters may be applied to the inputs to form many intermediate representations. Additional filters may be formed to operate on the intermediate representations creating more intermediate representations. This process may be repeated as prescribed by a user. There is a "final" group of intermediate representations, wherein no more filters act on these intermediate representations. In some instances, the structural relationship of the final intermediate representations is ablated; a process known as "flattening". The flattened representation may be passed to a neural network 200 to produce a final output. Note, that in this context, the neural network 200 is still considered part of the CNN. Like unto a neural network 200, a CNN is trained, after initialization of the filter weights, and the edge 204 values of the internal neural network 200, if present, with the backpropagation process in accordance with a loss function.

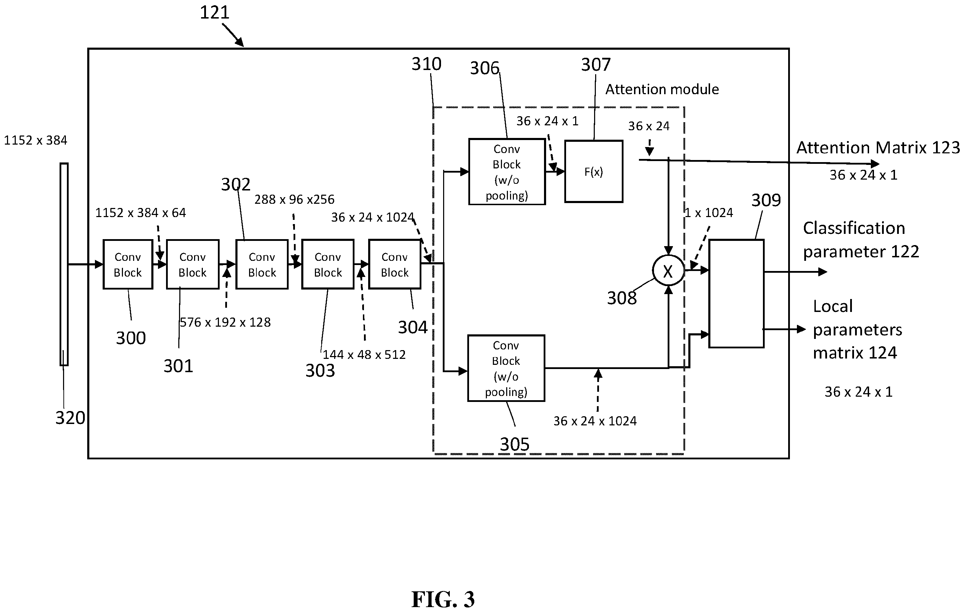

FIG. 3 illustrates an architecture of the machine-learned model 121, where the machine-learned model 121 is a CNN, in accordance with an embodiment of the present invention. In an embodiment, the architecture of the machine-learned model 121 use the ConvNext architecture, but it will be clear to a person of ordinary skill in the art that alternative architectures can be used. The machine-learned model 121 accepts an image 320 from the image acquisition module 110 as an input. While this can be any image, in the present application it may be an image of biological tissue. The machine-learned model 121 then processes the image 320 with a series of blocks, which will be described in detail further below.

FIG. 3 also illustrates the relative size of the data throughout the operations of the machine-learned model 121. In the example of FIG. 3, the input image is of a size $1152 \times 384$. The size of the data as it is processed by the machine-learned model 121 is dependent on the size of the input image. As such, the relative data sizes depicted in FIG. 3 are given with respect an image of size $1152 \times 384$ pixels, however, with a person of ordinary skill in the art will recognize that the machine-learned model 121 of FIG. 3 is not limited to this size of input, or the intermediate data sizes illustrated in FIG. 3. The CNN hyperparameters for the machine-learned model 121 may be selected by a user or may be identified during training. The CNN hyperparameters may include the size of convolution kernels used in the convolutions of the CNN, and the size of the pooling kernels. It will be clear to a person of ordinary skill in the art that different kernel sizes may be used in the implementation of the CNN according to embodiments.

Using this example input image size, the machine-learned model 121 processes the input image with a series of convolutional blocks 300 301 302 303 304. Each convolutional block 300 301 302 303 304 comprises at least one 2-dimensional convolution operation, and optionally, a pooling operation. For example, the first convolutional block 300, using a 2-dimensional convolution function such as Conv2D, generates 64 intermediate representations, or feature maps. In the example of FIG. 3, block 300 outputs data of size $1152 \times 384 \times 64$. In the example of FIG. 3, blocks 301 302 303 and 304 further comprise pooling operations. For example, block 301 receives the data of size $1152 \times 384 \times 64$ from block 300 to produce 64 further intermediate representations, followed by pooling, to output data of size $576 \times 192 \times 128$.

In FIG. 3, intermediate data output from each block 300 301 302 303 is processed by the subsequent block 301 302 303 304 until an intermediate representation is output from convolutional block 304. The output of the convolutional block 304 is here referred to as the image in the embedding space and may have a dimension $M \times N \times C$, with C feature maps of size $M \times N$. In the example dimensions shown in FIG.3, $M \times N \times C. = 36 \times 24 \times 1024$.

It will be clear to a person of ordinary skill in that art that further operations may be comprised within each convolutional block 300 301 302 303 304, such as activation operations or normalisation operations. It will also be clear to a person of ordinary skill in that art that additional or fewer convolutional blocks 300 301 302 303 304 can be used to generate what is here referred to as the image in the embedding space $M \times N \times C$.

The output (the image in the embedding space) of block 304 is then passed to an attention module 310.

The attention module 310 determines the relevance of different image regions for the determination of the classification parameter 122. In an embodiment, the attention module 310 is implemented as a feature map filter embedded after one of the convolutional blocks 300 301 302 303 304.

The output of convolutional block 304 has dimensions $M \times N \times C$, with C feature maps of size $M \times N$. The attention module 310 embedded after the convolutional block 304 outputs a matrix A with the same size $M \times N$ as each feature map. The element $A_{ij}$ of A indicates the attention weight (or saliency score) for the feature vector $F_{ij}$ composed of C channels located at (i; j) (i.e., $F_{ij} = C$) in the feature map. Each feature vector corresponds to a certain region of the input image.

The attention module 310 comprises a convolution block 306. However, unlike the convolution blocks 301-304, convolution block 306 does not comprise a pooling operation. The output of convolution block 306 is a matrix of dimensions $36 \times 24 \times 1$. This matrix is then processed by a function block 307 which forces the values in the matrix after convolution block 306 to sum to 1. The purpose of this function is to generate an attention matrix 123 which will force the model to "select" regions of the image at the next step. The function block 307 may be a Softmax function or a sparse max function. In the example of FIG. 3, the attention matrix 123 is of size $36 \times 24$ compared to the output of convolutional block 304 (or input to the attention module 310) which is $36 \times 24 \times 1024$. The size of the attention matrix 123 ($M \times N$) is identical to the size of the first two dimensions of the image in embedding space ($M \times N \times C$). The attention matrix 123 is then output from the machine-learned model 121. The attention matrix 123 is also further processed by function 308, discussed further below.

While in FIG. 3, the attention module 310 is shown after the convolutional block 304, it may be placed after one of convolution blocks 300 301 302 303. Placement of the attention moule 310 after one of convolution blocks 300 301 302 303 would result in an attention matrix 123 of dimensions different that $36 \times 24$ (M $\times$ N). For example, if the attention module 310 were placed after convolution block 303, the attention matrix 123 would have dimensions $144 \times 48$. In an embodiment, the attention matrix 123 is resized to be the same size of the first two dimensions of the image in embedding space (M $\times$ N $\times$ C) (in FIG. 3 output of convolutional block 304).

Optionally, the attention module 310 further comprises a convolutional block 305. The output of convolutional block 304 is processed by convolutional block 305. Unlike the convolution blocks 301-304, convolution block 305 does not comprise a pooling operation. Convolution block 305 allows for additional optimization parameters to be generated independent from the attention matrix 123 generation by effectively increasing the field of view seen by the model. The output of convolution block 305 is then further processed by both function 308 and the linear layer 309.

Function 308 is a batch matrix-matrix product function that multiplies the attention matrix 123 and the matrix output from convolutional block 305. The output of function 309 is a vector of size 1x1024, referred to as the aggregated representation of the image in the embedding space. It can be regarded as a spatial averaging of the image in the embedding space, weighted by the attention. Hence this can also be regarded as an "attention pooling".

A linear layer 309 is then used to process the output of function 309 to generate the classification parameter 122. In an alternative embodiment, a fully connected layer is used instead of the linear layer 309.

The output of convolutional block 305 is then processed by the linear layer 309 (or fully connected layer) to generate a local score for each vector C of the output of convolutional block 305. This results in a local parameters matrix 124 comprising a matrix of size $36 \times 24$, or M $\times$ N. As will be discussed further below, in an embodiment, the machine-learned model 121 is only trained for generating the classification parameter 122 and not for generating the local parameters matrix 124. In this way the local parameters matrix 124 is generated based on the image in the embedding space being processed through a layer of the machine-learned model 121 that has been trained to generate the classification parameter only. By training the machine-learned model 121 comprising the attention module 310 to generate the classification parameter 122, an attention matrix 123 is naturally generated in, as well as appropriate values for the linear layer 309. During the training of the machine-learned model 121, the values of the local score matrix 124 is not considered, as the training data does not have labels with respect to the regions, or subparts, of the images used for training. However, once the machine-learned model 121 is trained, the local score matrix 124 is still generated by sending the output of block 305 to the linear layer 309 (that was never trained to determine parameters for the regions of the images). This has the advantage of not having to label sub parts (or regions) of images for training the model, while still generating local parameter values (within the local parameters matrix 124) with the machine-learned model 121. Compared to tiling the input image and passing each tile successively to the machine-learned model to obtain local parameters from the image in embedding space for each tile so as to generate the local parameters matrix 124, the described method is faster and more efficient in terms of speed.

Alternatively, the machine-learned model 121 is trained to both generate the classification parameter 122 and to generate the local parameters matrix 124. This is achieved by training the machine-learned model 121 on a set of training images, with a plurality of labels associated with regions of the image.

In the embodiment, of FIG. 3, the same linear layer 309 is used to generate both the local parameters matrix 124 and the classification parameter 122. In an alternative embodiment, a first linear layer 309 is used to generate the classification parameter 122 and a second linear layer 309 is used to generate the local parameters matrix 124. In this embodiment, the machine-learned model 121 is trained on a set of training images, with a plurality of labels associated with regions, or sub-regions, of the image.

In an embodiment, the local parameters matrix 124 and the attention matrix 123 are of the same dimensions. In an alternative embodiment, the local parameters matrix 124 and the attention matrix 123 are different in dimensions. Each value in the attention matrix 123 is associated with a value in the local parameters matrix 124, where each value in the local parameters matrix 124 is associated with a given patch of the input image 320.

While an embodiment using a CNN (600) for the machine-learned model type has been described above, a person of ordinary skill in the art will appreciate that the instant disclosure is not limited to this machine-learned model type. Machine-learned models such as a random forest, transformer models, visual transformers (ViTs), or non-parametric methods such as K-nearest neighbours or a Gaussian process may be readily inserted into this framework and do not depart from the scope of this disclosure.

There are many different ways to implement attention mechanisms in deep learning models, and the person of ordinary skill in the art will understand that the specific implementation will depend on the specific task and the type of model being used.

In an alternative embodiment, the first processing model 120 does not comprise a machine-learned model 121. In that case, the classification parameter 122 and the local parameters matrix 124 may be based on an algorithm used to determine features of the input image. In an embodiment, the attention matrix 123 can be generated by "hiding" areas in the input image, and determine the effect this "hiding" has on the classification parameter 122 score. In an embodiment, a first classification parameter 122 is determined for the whole image. A region of the input image is then hidden (not used for determining the classification parameter 122) and a second classification parameter 122 is determined. The first classification parameter 122 and the second classification parameter 122 are compared to determine the attention weight for the hidden region. In an embodiment, the higher the difference in prediction score, the higher the attention for the hidden region. This approach may be repeated for different regions generating the attention weights for the attention matrix 123.

As described with reference to FIG. 1, the second processing module 130 uses the outputs from the first processing module 120 to generate a mapping element 125. In an embodiment, the second processing module 130 comprises a patch matrix module 130a to output a patch matrix 127 and a mapping element module 130b.

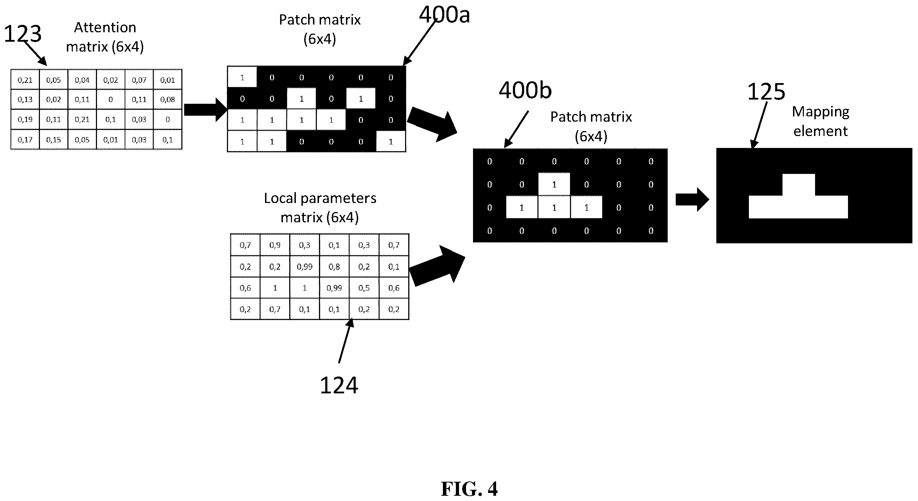

FIG. 4 illustrates a method of generating a mapping element 125 in accordance with an embodiment. For simplified explanation, the attention matrix 123 and the local parameters matrix 124 are shown with dimensions of $6 \times 4$. However, it will be clear to a person of ordinary skill in the art that the attention matrix 123 and the local parameters matrix 124 may have different dimensions. Each value of the attention matrix 123 and each value of the local parameters matrix 124 is associated with at least one patch of the input image.

A patch matrix 400a 400b is generated with dimensions corresponding to those of the attention matrix 123, which in FIG.4 is $6 \times 4$. The patch matrix 400a 400b is shown as patch matrix 127 in FIG. 1. Each element of the patch matrix 400a 400b corresponds to an element of the attention matrix 123 and to an element of the local parameter matrix 124, where each element of the attention matrix 123 and each element of the local parameter matrix 124 is associated to an element of the image in the embedding spaced (considered in the spatial dimension $M \times N$), and each element of the image in the embedding space (considered in the spatial dimension $M \times N$) is associated with a patch of the input image. A value of each element of the patch matrix 400a 400b may be determined based on the corresponding value in the attention matrix 123 for that patch and the corresponding score in the local attention matrix 123 for that patch.

In the embodiment of FIG. 4, each element of the patch matrix 400a may be initially set to an arbitrary value (e.g. 1). Based on the attention matrix 123 a first number of patches to conserve is identified. In the example of FIG.4, the attention matrix 123 is filtered, based on a ranking, to identify the ten patches with the highest scores in the attention matrix 123. In an embodiment, the attention matrix 123 is filtered, based on a ranking, to identify the one hundred patches with the highest scores in the attention matrix 123. Alternatively, patches may be identified based on a comparison of the value in the attention matrix 123 for that patch with a first threshold. For each patch of the first number of patches to conserved, the corresponding element of the patch matrix is set to a first value (e.g. 1) and for each non-conserved patch, the corresponding element of the patch matrix is set to a second value (e.g. 0). Alternatively, patches may be identified based on a comparison of the value in the attention matrix 123 for that patch with a plurality of thresholds, or based on a ranking, and the corresponding elements of the patch matrix can be set to a value of a plurality of values based on the comparison or ranking.

The first number of patches may be filtered based on the local parameters matrix 124. In an embodiment, the first number of patches identified in the patch matrix 400a is filtered to conserve those patches whose corresponding score in the local parameters matrix 214 exceeds a second threshold. In the example of FIG.4, only patches whose corresponding score in the local parameters matrix 214 is equal to or exceeds 0.99 are conserved. The patch matrix is then altered from 400a to 400b by setting the non-conserved patches to the second value (e.g. 0).

It will be clear to a person of ordinary skill in the art that alternative methods of generating the patch matrix based on the attention matrix 123 and the local parameters matrix 124 may be implemented. In an alternative embodiment, the patch matrix may be generated by a first filtering based on the local parameters matrix 124, followed by a second filtering based on the attention matrix 123. Alternatively, the patch matrix may be generated based on a single comparison of corresponding elements of the attention matrix 123 and the local parameters matrix 124 against predetermined thresholds, or based on a ranking.

The generated patch matrix 400b thus indicates the patches of the image that are considered to be regions of interest, with each element of the patch matrix 400b associated with a patch of the input image.

The patch matrix 400b may then be used to generate a mapping element 125, where the mapping element 125 identifies the region of interest in the dimensional spatial space of the input image. Referring to FIG. 1, the mapping element 125 is generated by the mapping element module 130b.

In the embodiment of FIG. 4, the mapping element 125 is an image that corresponds to the patches of the patch matrix. In an alternative embodiment, the mapping element 125 corresponds to only the conserved patches of the patch matrix 400b.

In an embodiment, the mapping element 125 is of the same dimensions or scale as the image of the biological tissue. In an alternative embodiment 125, the mapping element 125 is not of the same dimensions or scale as the image of the biological tissue.

In an embodiment, the mapping element 125 is linked to the classification parameter 122. In an embodiment, the mapping element 125 is assigned a display feature, such as one of a colour, a level of transparency, or a shape based on the classification parameter 122. For example, the mapping element 125 may be assigned a colour based on a continuum of colour spanning from green (classification parameter = 0 %) to red (classification parameter = 100 %). In this way, the mapping element 125 may take the form of a heat map. In an alternative embodiment, the mapping element 125 is generated based on the patch matrix, but provides freeform contouring of the region identified in the patch matrix, or at least one shape type enclosing or indicating the region identified in the patch matrix.

The display module 140 is then used to display the mapping element 125 to the user. In an embodiment, the display module 140 is configured to display the mapping element 125 so that the mapping element 125 is located relative to the input image. In an embodiment, the mapping element is displayed superimposed on the input image. In an alternate embodiment, the mapping element 125 has a degree of transparency so that it does not hide the input image under the coloured tiles.

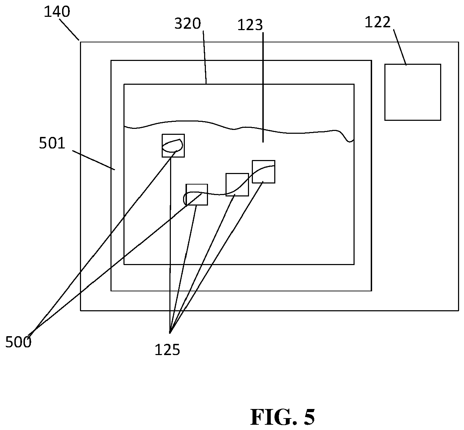

FIG. 5 illustrates a display the display module 140 according to an embodiment. In FIG.5, the mapping element 125 (shown as boxes in FIG. 5) is displayed superimposed on the input image 320 or another image of the entire region of interest.

The mapping elements 125 may be at least partially transparent so tissue structures or features 500 of the input image that have been determined as regions of interest can be observed by a user. In an embodiment, the classification parameter 122 is displayed alongside the input image 320 and the mapping element 125. In the case of multi-class classification, multiple classification parameters 122 may be displayed. In an embodiment, the input image is comprised in a frame 501 which has a colour corresponding to the classification parameter 122, and the mapping element 125 also has a colour corresponding to the classification parameter 122.

In an embodiment, the classification parameter 122 and mapping element 125 are displayed in real time, in parallel to the acquisition of the images of the biological tissue. In the context of live acquisition, a graph may be displayed, showing the value of the classification parameter 122 over a given timeframe. In the context of review, such as retrieving images or videos from a file previously acquired during a measurement session, a graph may be displayed, showing the value of the classification parameter 122 over the entire measurement period. Alternatively, in the context of review of a 3D volume, a graph may be displayed showing the value of the classification parameter 122 against an axis of the 3D volume, that corresponds to images cut from the 3D along this axis.

Considering the double filtering approach described above, the conserved tiles in the patch matrix 400b only correspond to patches which were both relevant for the generation of the classification parameter 122 (based on elevated attention) and having an elevated local score in the local parameters matrix 124. This approach allows to reduce the number of tiles in the mapping element to the ones that are particularly relevant. This reduces the amount of data displayed to the user while focusing on the regions of interest. In this way, only relevant information is displayed to the user. By prioritizing areas of concern, or regions of interest, for display, it minimizes extraneous information being presented in the absence of suspicious tissue features. This approach significantly narrows the regions of interest displayed, for example, when the model indicates a non-BCC outcome, reducing visual clutter while maintaining focus on pertinent areas of concern.

In the case of a machine-learned model 121 trained to provide multi-class classification, the machine-learned model 121 may generate a plurality of attention matrices 123. For example, in an embodiment, for a machine learned model 121 trained to provide classification for a number (Y) pathologies, then Y attention matrices 123 and Y classification parameters 122 may be generated, each attention matrix 123 and each classification parameter 122 associated with one of the pathologies. In an embodiment, a single linear layer is used to generate the Y classification parameters 122 and a single local parameters matrix 124. In an alternative embodiment, there may be Y linear layers 309, one for each class, where each linear layer 309 generates a classification parameter 122 and a local parameters matrix 124 for that class.

In a further embodiment, a plurality of mapping elements 125 may be generated. For a machine learned model 121 trained to provide classification for a number (Y) pathologies (or medical conditions), Y mapping elements are provided, each mapping element 125 associated with a different pathology (or medical condition). In an embodiment, all or a number of the mapping elements 125 are displayed. In an embodiment, a number of mapping elements 125 to display is based on a user input. In an embodiment, only the mapping element 125 associated with a classification parameter 122 with the highest values of the Y classification parameters 122 is displayed.

In an embodiment, the display module is further configured to display or remove from the display the mapping element 125 in response to a user instruction, such as a voice command or the selection of a button.

In an embodiment, an input can be received from the user indicating at least one medical condition, for example prior to acquisition of the image. The display module 140 is configured to display the classification parameter of the plurality Y classification parameters 122 associated with the medical condition inputted by the user and the mapping element of the plurality of mapping elements 125 associated with the medical condition inputted by the user, for example once acquisition has started. In a further embodiment, the display module 140 is further configured to compare the plurality Y of classification parameters 122 to the input of the user, if the classification parameter for the medical condition inputted by the user is above a predetermined threshold, the display module 140 displays the mapping element associated with the classification parameter.

In an embodiment, the system 100 is configured to operate in real time.

To train the machine-learned model 121 (e.g., the CNN 121 of FIG. 3), training data must be provided. The machine-learned model 121 model is trained on a plurality of training images of biological tissue, herein referred to as the training images. Following training, the trained machine-learned model 121 model is validated on a plurality of images of biological tissue not included in the training images, herein referred to as the validation images.

In an embodiment, the training images and the validation images are vertical section images, which are images in a plane perpendicular to the surface of the tissue sample being imaged (or B Scans), such as skin. In an embodiment, the training images and the validation images are 1.2mm $\times$ 0.4mm. Alternatively, the training images and validation images may be horizontal section images in a plane parallel to the tissue sample being imaged, such as skin. It will be clear to a person of ordinary skill in the art, that different types of images and images with other dimensions may be used. Each image of the training images and the validation images presents typical features of a pathology or no pathology (i.e. healthy).

Each image of the training images and the validation images is labelled with an associated pathology label, where the diagnosis has been performed by a trained person. In the context of skin cancer diagnosis using LC-OCT, a typical list of pathology labels includes healthy, BCC, squamous cell carcinoma (SCC), actinic keratosis (AK), dermal nevus, melanocytic lesion, sebaceous hyperplasia (SH), seborrheic keratosis (SK), other.

In an embodiment, the training images and the validation images may be video frames extracted from a video.

In an embodiment, the training images and the validation images are obtained from 3D volumes. Using an image acquisition system, such as a commercial LC-OCT system, a 3D volume can be obtained. For example, an image acquisition system can be configured to construct a 3D volume from a stack of images in a first plane. From the 3D volume, a set of images can be obtained by slicing the 3D volume in a second plane, different from the first plane.

For example, a 3D volume may be constructed from a stack of horizontal images. For example, horizontal images of dimensions 1.2 $\times$ 0.5 mm in in a plane parallel to the surface of the tissue can be stacked together to form a volume of dimensions 1.2 $\times$ 0.5 $\times$ 0.5 mm typically. From the 3D volume (or stack), vertical section images can be obtained by slicing the 3D volume in a plane perpendicular to the surface of the tissue. For example, the 3D volume described above with dimensions 1.2 $\times$ 0.5 $\times$ 0.5 mm, from the vertical images obtained by slicing can have dimensions ~ 1.2 $\times$ 0.5 mm. In this example, approximately 500 vertical images can be obtained, as the dimension in the y direction is 0.5 mm with a 1 $\mu$m resolution gives 500 images. However, further images could be obtained by slicing the 3D volume in a plane that is at an angle, or diagonal to the horizontal images.

By constructing a 3D volume from a set of images in a first plane, and then generating the training images and validation images by slicing the 3D volume, a large amount of training and validation images can be generated.

During training, one or more training images are provided to the machine-learned model 121 as an input. The machine-learned model 121 processes the one or more training images and produces at least one classification parameter 122. The at least one classification parameter 122 is compared to the label. During training, the machine-learned model 121 is adjusted such that the classification parameter 122 output by the machine-learned model 121, upon receiving one or more training images, is similar to the one or more labels. Once the machine-learned model 121 is trained, the validation images are processed by the trained machine-learned model 121 and the at least one classification parameter 122 output by the machine-learned model 121 is compared to the label validation images. Thus, the performance of the trained machine-learned model 121 can be evaluated. If the trained machine-learned model 121 is found to have suitable performance as evaluated on the validation images, where the criterion for suitable performance is defined by a user, then the trained machine-learned model 121 is accepted for use on new unlabelled images.

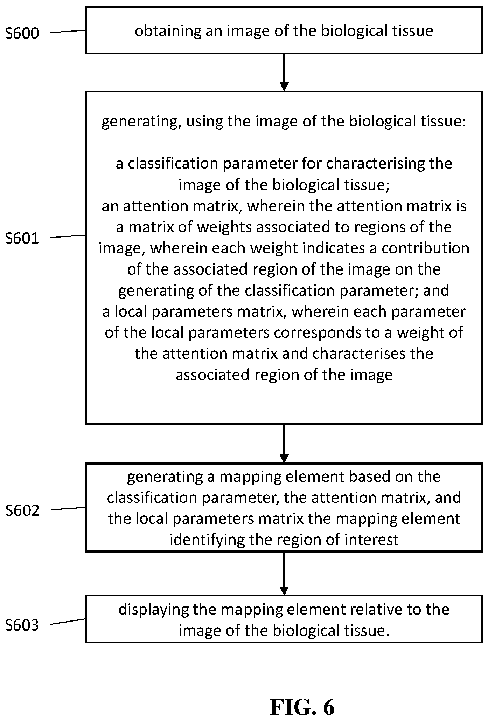

FIG. 6 illustrates a method for determining a region of interest according to an embodiment. In Step S600, an image of the biological tissue is obtained. At Step S601, a number of parameters are generated using the image of the biological tissue. These include: a classification parameter 122 for characterising the image of the biological tissue; an attention matrix 123, wherein the attention matrix 123 is a matrix of weights associated to regions of the image, wherein each weight indicates a contribution of the associated region of the image on the generating of the classification parameter 122; and a local parameters matrix 124, wherein each parameter of the local parameters matrix 124 corresponds to a weight of the attention matrix 123 and characterises the associated region of the image.

At Step S602, a mapping element 125 is generated based on the classification parameter, the attention matrix, and the local parameters matrix the mapping element identifying the region of interest. At Step S603, the mapping element 125 is displayed relative to the image of the biological tissue.

While the invention has been described with respect to a limited number of embodiments, those skilled in the art, having benefit of this disclosure, will appreciate that other embodiments can be devised which do not depart from the spirit of the invention as disclosed herein. Accordingly, the scope of the invention should be limited only by the attached claims.

REFERNCES:

[1] US2019/0286880 "DEEP LEARNING AUTOMATED DERMATOPATHOLOGY"

[2] WO2021/016721 "SYSTEMS, METHODS AND APPARATUSES FOR VISUALIZATION OF IMAGING DATA".

[3] WO2018/156133 "METHOD AND SYSTEM FOR ASSISTING PATHOLOGIST IDENTIFICATION OF TUMOR CELLS IN MAGNIFIED TISSUE IMAGES"

[4] WO2020/261183 "SYSTEMS AND METHODS FOR IMAGE PREPROCESSING"

[5] US2022/0133215 "METHOD FOR EVALUATING SKIN LESIONS USING ARTIFICIAL INTELLIGENCE",

[6] Campanella G, et al. Deep Learning for Basal Cell Carcinoma Detection for Reflectance Confocal Microscopy. J Invest Dermatol. 2022 Jan;142(1):97-103.

[7] Fischman S, et al. Non-invasive scoring of cellular atypia in keratinocyte cancers in 3D LC-OCT images using Deep Learning. Sci Rep. 2022 Jan 10;12(1):481.

[8] Selvaraju R. R. et al. Grad-CAM: Visual Explanations from Deep Networks via Gradient-Based Localization. 2017 IEEE International Conference on Computer Vision (ICCV), Venice, Italy, 2017, pp. 618-626.

[9] Pei W, Dibeklioğlu H, Baltrušaitis T, and Tax D. M. J. Attended End-to-End Architecture for Age Estimation From Facial Expression Videos. IEEE Transactions on Image Processing, vol. 29, pp. 1972-1984, 2020.

## Claims

1. A system for determining a region of interest of a biological tissue comprising:

   an image acquisition system configured to obtain an image of the biological tissue;
   a first processing module configured to generate, using the image of the biological tissue:

   a classification parameter for characterising the image of the biological tissue;
   an attention matrix, wherein the attention matrix is a matrix of weights associated to regions of the image, wherein each weight indicates a contribution of the associated region of the image on the generating of the classification parameter; and
   a local parameters matrix, wherein each parameter of the local parameters matrix corresponds to a weight of the attention matrix and characterises the associated region of the image;

   a second processing module configured to generate a mapping element based on the classification parameter, the attention matrix, and the local parameters matrix the mapping element identifying the region of interest; and
   a display module configured to display the mapping element relative to the image of the biological tissue.

2. A system according to claim 1, wherein the classification parameter is a score indicating a probability of a medical condition being associated with the image of the biological tissue, and wherein each parameter of the local parameters matrix is a score indicating a probability of the medical condition being associated with the region of the image.

3. A system according to any preceding claim, wherein the first processing module comprises a machine-learned model, the machine-learned model trained to generate the classification parameter, wherein the classification parameter and, optionally, the local parameters matrix are generated using the machine-learned model.

4. A system according to claim 3, wherein the machine learned model comprises an attention module configured to generate the attention matrix.

5. A system according to any claim 3 or claim 4 wherein the machine-learned model is a convolutional neural network.

6. A system according to any preceding claim, wherein the classification parameter is generated based on the attention matrix.

7. A system according to any preceding claim wherein the second processing module is further configured to:

generate a patch matrix based on the attention matrix and the local parameters matrix;
filter patches in the patch matrix based on the attention matrix;
filter the patches in the patch matrix based on the local parameters matrix; and
generate the mapping element based on the patch matrix.

8. A system according to any preceding claim wherein the mapping element further identifies the classification parameter.

9. A system according to claim 8, wherein the classification parameter is associated with a display feature of a set of predefined display features, each display feature of the set of predefined display features associated with a range of possible classification parameter values, wherein the mapping element comprises the display feature associated with the classification parameter.

10. A system according to claim 3, wherein the machine-learned model comprises:
a single classification head configured to generate the classification parameter, the attention matrix and the local parameters matrix; and
a multi-class classification head configured to generate a plurality of further classification parameters.

11. A system according to any preceding claim wherein the image of the biological tissue is a microscopy image.

12. A system according to any preceding claim wherein the image acquisition system is one of a reflectance confocal microscopy system, an optical coherence tomography system, a line-field confocal optical coherence tomography system, a dermoscopy system, and a multi-photon fluorescence imaging.

13. A system according to any preceding claim wherein the trained machine-learned model was trained by on a set of training images, the set of training images obtained by:

obtaining a 3D representation of biological tissue, the 3D representation obtained by stacking images in a first plane; and
slicing the 3D representation in a second plane to create the set of training images....

14. A method for determining a region of interest of a biological tissue comprising:

obtaining an image of the biological tissue;
generating, using the image of the biological tissue:

a classification parameter for characterising the image of the biological tissue;
an attention matrix, wherein the attention matrix is a matrix of weights associated to regions of the image, wherein each weight indicates a contribution of the associated region of the image on the generating of the classification parameter; and
a local parameters matrix, wherein each parameter of the local parameters matrix corresponds to a weight of the attention matrix and characterises the associated region of the image;

generating a mapping element based on the classification parameter, the attention matrix, and the local parameters matrix the mapping element identifying the region of interest; and
displaying the mapping element relative to the image of the biological tissue.

15. A computer readable medium comprising instructions which, when executed by a computer, cause the computer to carry out the method of claim 14.

**FIG. 1**

**FIG. 2**

121

310  306  307

Attention module

1152 x 384

36 x 24 x 1

36 x 24

Attention Matrix 123

36 x 24 x 1

Conv Block (w/o pooling)

F(x)

1152 x 384 x 64

302

288 x 96 x256

36 x 24 x 1024

1 x 1024

309

Conv Block

Conv Block

Conv Block

Conv Block

Conv Block

Classification parameter 122

300

301

576 x 192 x 128

303

144 x 48 x 512

304

305

308

Conv Block (w/o pooling)

36 x 24 x 1024

Local parameters matrix 124

36 x 24 x 1

320

**FIG. 3**

FIG. 4

**FIG. 5**

S600 — | obtaining an image of the biological tissue |

S601 — | generating, using the image of the biological tissue:

a classification parameter for characterising the image of the biological tissue;
an attention matrix, wherein the attention matrix is a matrix of weights associated to regions of the image, wherein each weight indicates a contribution of the associated region of the image on the generating of the classification parameter; and
a local parameters matrix, wherein each parameter of the local parameters corresponds to a weight of the attention matrix and characterises the associated region of the image |

S602 — | generating a mapping element based on the classification parameter, the attention matrix, and the local parameters matrix the mapping element identifying the region of interest |

S603 — | displaying the mapping element relative to the image of the biological tissue. |

# FIG. 6

Europäisches
Patentamt

European
Patent Office

Office européen
des brevets

**EUROPEAN SEARCH REPORT**

Application Number

EP 24 30 5189

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PEDRO RAFAEL ET AL: "Assessing the Impact of Attention and Self-Attention Mechanisms on the Classification of Skin Lesions", 2022 INTERNATIONAL JOINT CONFERENCE ON NEURAL NETWORKS (IJCNN), IEEE, 18 July 2022 (2022-07-18), pages 1-8, XP034199259, DOI: 10.1109/IJCNN55064.2022.9892274 [retrieved on 2022-09-30] * Abstract * * figure 3 * * figure 9 * * figure 10 * * page 3, col. 1, par. 2 * * page 5, col. 2, pars. 1-3 * * page 7, col. 1 * * page 8, col. 1, par. 3 * * page 8, col. 2, par. 3 * ----- | 1-15 | INV. G06V10/764 G06V10/82 |
| X | WENJIE PEI ET AL: "Attended End-to-end Architecture for Age Estimation from Facial Expression Videos", ARXIV.ORG, CORNELL UNIVERSITY LIBRARY, 201 OLIN LIBRARY CORNELL UNIVERSITY ITHACA, NY 14853, 23 November 2017 (2017-11-23), XP080839700, * the whole document * ----- -/-- | 1-15 | TECHNICAL FIELDS SEARCHED (IPC) G06V |

The present search report has been drawn up for all claims

| Place of search | Date of completion of the search | Examiner |
|---|---|---|
| The Hague | 3 June 2024 | Ionescu, Tudor |

EPO FORM 1503 03.82 (P04C01)

Europäisches
Patentamt

European
Patent Office

Office européen
des brevets

**EUROPEAN SEARCH REPORT**

Application Number

EP 24 30 5189

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Lboukili Imane: "Analysis and characterization of the tissue structure of the epidermis from confocal imaging", , 8 December 2023 (2023-12-08), pages 1-167, XP093135922, Retrieved from the Internet: URL:https://theses.hal.science/tel-0433125 6v1/preview/2023COAZ4067.pdf#page=2 [retrieved on 2024-02-28] * the whole document * | 1-15 | |
| A | ABDELHALIM IBRAHIM SAAD ALY ET AL: "Data augmentation for skin lesion using self-attention based progressive generative adversarial network", EXPERT SYSTEMS WITH APPLICATIONS, ELSEVIER, AMSTERDAM, NL, vol. 165, 3 September 2020 (2020-09-03), XP086405511, ISSN: 0957-4174, DOI: 10.1016/J.ESWA.2020.113922 [retrieved on 2020-09-03] * the whole document * | 1-15 | TECHNICAL FIELDS SEARCHED (IPC) |

The present search report has been drawn up for all claims

| Place of search | Date of completion of the search | Examiner |
|---|---|---|
| The Hague | 3 June 2024 | Ionescu, Tudor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190286880 A
- WO 2021016721 A
- WO 2018156133 A
- WO 2020261183 A
- US 20220133215 A

**Non-patent literature cited in the description**

- **CAMPANELLA G et al.** Deep Learning for Basal Cell Carcinoma Detection for Reflectance Confocal Microscopy. *J Invest Dermatol.*, January 2022, vol. 142 (1), 97-103
- **FISCHMAN S et al.** Non-invasive scoring of cellular atypia in keratinocyte cancers in 3D LC-OCT images using Deep Learning. *Sci Rep.*, 10 January 2022, vol. 12 (1), 481
- **SELVARAJU R. R et al.** Grad-CAM: Visual Explanations from Deep Networks via Gradient-Based Localization. *2017 IEEE International Conference on Computer Vision (ICCV), Venice, Italy*, 2017, 618-626